# EUROPEAN PATENT APPLICATION

(11) **EP 4 723 652 A1**
(43) Date of publication of application: **08.04.2026**
(21) Application number: 24825236.3
(22) Date of filing: 18.06.2024
(51) Int. Cl.: H04N 21/4363

(54) **WIRELESS SCREEN MIRRORING METHOD AND APPARATUS**

(30) Priority: 21.06.2023 CN 202310747672
(71) Applicant: Huawei Technologies Co., Ltd., Shenzhen, Guangdong 518129 (CN)
(72) Inventor: YUAN, Peng, Shenzhen, Guangdong 518129 (CN); HE, Bin, Shenzhen, Guangdong 518129 (CN); WANG, Jue, Shenzhen, Guangdong 518129 (CN); CHEN, Zeyu, Shenzhen, Guangdong 518129 (CN)
(74) Representative: Goddar, Heinz J.
(86) International application number: PCT/CN2024/099832
(87) International publication number: WO 2024/260342

(57) **Abstract**

This application discloses a wireless screen casting method and apparatus. The method includes: A terminal device obtains M device names, where the M device names are obtained by separately searching for E display devices according to N screen casting protocols, and M is greater than E (S310); generates a device name list based on the M device names, where the device name list includes E device names in the M device names, and the E device names respectively correspond to the E display devices (S320); receives an indication message entered by a user, where the indication message points to a first device name in the E device names, and the first device name corresponds to a first display device in the E display devices (S330); and the terminal device performs screen casting onto the first display device (S340). According to this application, complexity of selecting a display device by the user can be reduced, and an end-to-end delay can be shortened, thereby improving user experience.

## Description

This application claims priority to Chinese Patent Application No. 202310747672.8, filed with the China National Intellectual Property Administration on June 21, 2023 and entitled "WIRELESS SCREEN CASTING METHOD AND APPARATUS", which is incorporated herein by reference in its entirety.

### TECHNICAL FIELD

This application relates to the field of wireless communication technologies, and in particular, to a wireless screen casting method and apparatus.

### BACKGROUND

Currently, protocols used for wireless mirroring screen casting include a Miracast protocol formulated by the Wi-Fi Alliance and proprietary protocols formulated by companies (for example, an AirPlay protocol formulated by Apple Inc.). The protocols mainly implement device discovery and data transmission through a technology like a wireless access point (Wi-Fi Access Point, Wi-Fi AP) or a wireless direct connection Wi-Fi Direct.

However, when a terminal device searches for a screen casting device, because the screen casting protocols are independent of each other, the screen casting protocols respectively have different discovery procedures, and are unaware of each other. Consequently, each screen casting device correspondingly displays a plurality of device names, causing a trouble for a user to select the screen casting device. In addition, if the terminal device performs screen casting according to a digital living network alliance (Digital Living Network Alliance, DLNA) protocol, the protocol further has a problem of a high end-to-end delay, greatly affecting user experience.

### SUMMARY

Embodiments of this application provide a wireless screen casting method and apparatus, to reduce complexity of selecting a display device by a user, and shorten an end-to-end delay, so as to improve user experience.

According to a first aspect, this application provides a wireless screen casting method. The method includes: A terminal device obtains M device names, where the M device names are obtained by separately searching for E display devices according to N screen casting protocols, M is greater than E, and M, N, and E are positive integers; a device name list is generated based on the M device names, where the device name list includes E device names in the M device names, and the E device names respectively correspond to the E display devices; an indication message entered by a user is received, where the indication message points to a first device name in the E device names, and the first device name corresponds to a first display device in the E display devices; and the terminal device performs screen casting onto the first display device.

From a perspective of technical effect, in this application, a plurality of device names obtained by searching for a same display device according to different protocols are unified, to obtain the device name list in which one display device corresponds to one device name. Compared with that in a case in which one display device corresponds to a plurality of device names in the conventional technology, complexity of selecting a display device by a user can be greatly reduced, thereby effectively improving user experience.

In a feasible implementation, the E display devices include a second display device. That the device name list is generated based on the M device names includes: obtaining, from the M device names, one or more device names corresponding to the second display device, where the one or more device names separately include a device identifier of the second display device; or similarity between internet protocol IP addresses respectively corresponding to any two of the one or more device names is greater than or equal to a first threshold, and at least one of the one or more device names includes the device identifier of the second display device; or similarity between medium access control MAC addresses respectively corresponding to any two of the one or more device names is greater than or equal to a second threshold, and the at least one of the one or more device names includes the device identifier of the second display device, where a device name corresponding to the second display device in the device name list is one of the one or more device names.

From the perspective of the technical effect, in this application, the unification is performed in three manners: the device identifier included in the device name, the device identifier and the IP addresses, and the device identifier, the MAC addresses, and the like, and a speed of performing the unification for the generation directly using the device identifier is high. A unification result is more accurate in the manner of unifying the device identifier with the IP addresses/MAC addresses.

In a feasible implementation, that the terminal device performs the screen casting onto the first display device includes: performing the screen casting onto the first display device according to a first screen casting protocol in a screen casting protocol list; and if the screen casting according to the first screen casting protocol fails, performing the screen casting onto the first display device according to a next screen casting protocol of the first screen casting protocol in the screen casting protocol list, where when the screen casting is performed for a 1^{st} time, the first screen casting protocol is a 1^{st} screen casting protocol in the screen casting protocol list, the screen casting protocol list is obtained through ranking based on delays or screen casting success rates of the screen casting protocols, and a lower delay of the screen casting protocol indicates a higher ranking of the screen casting protocol in the screen casting protocol list, or a higher screen casting success rate of the screen casting protocol indicates a higher ranking of the screen casting protocol in the screen casting protocol list.

From the perspective of the technical effect, in this application, the screen casting protocols are ranked based on the screen casting success rates or the delays of the screen casting protocols, and the screen casting protocols are sequentially selected for the screen casting in descending order of the success rates or in ascending order of the delays. This ensures that an optimal screen casting protocol is selected, thereby improving user experience.

In a feasible implementation, when the selected screen casting protocol is a digital living network alliance DLNA protocol, the method further includes: When a delay between a picture displayed on the terminal device and a picture displayed on the first display device is greater than or equal to a third threshold, the terminal device stops encapsulating a data file to be sent to the first display device, where duration for stopping the encapsulation is preset duration.

From the perspective of the technical effect, because an end-to-end delay is high when the DLNA protocol is used, in this application, a transmit end can suspend the encapsulation of the data file for a period of time, to consume a data file in a buffer of a receive end, so as to shorten the end-to-end delay, and improve operation experience of the user in this mirroring mode.

In a feasible implementation, when the selected screen casting protocol is a digital living network alliance DLNA protocol, the method further includes: when a delay between a picture displayed on the terminal device and a picture displayed on the first display device is greater than or equal to a third threshold, selecting D frames from a data file including C frames, encapsulating the D frames, and sending the D frames to the first display device, where D is a positive integer less than C.

From the perspective of the technical effect, because an end-to-end delay is high when the DLNA protocol is used, in this application, sampling encapsulation can be performed on the to-be-sent data file, to reduce data buffered by a receive end, so as to shorten the end-to-end delay, and improve operation experience of the user.

In a feasible implementation, when the selected screen casting protocol is a digital living network alliance DLNA protocol, the method further includes: When a delay between a picture displayed on the terminal device and a picture displayed on the first display device is greater than or equal to a third threshold, F timestamps respectively corresponding to F frames in a data file are adjusted, where the F timestamps include a first timestamp, a moment indicated by an adjusted first timestamp is earlier than a moment indicated by the first timestamp, and F is a positive integer; and the terminal device encapsulates an adjusted data file, and sends the adjusted data file to the first display device.

From the perspective of the technical effect, because an end-to-end delay is high when the DLNA protocol is used, in this application, a timestamp of the data file can be adjusted, to increase a playing speed of a receive end, and reduce an amount of data buffered by the receive end, so as to shorten the end-to-end delay, and improve operation experience of the user.

The data file encapsulated by the terminal device in this application includes one or more of files of types such as an audio and a video.

According to a second aspect, this application provides a wireless screen casting apparatus. The apparatus includes: a search unit, configured to obtain M device names, where the M device names are obtained by separately searching for E display devices according to N screen casting protocols, M is greater than E, and M, N, and E are positive integers; a processing unit, configured to generate a device name list based on the M device names, where the device name list includes E device names in the M device names, and the E device names respectively correspond to the E display devices; an interaction unit, configured to receive an indication message entered by a user, where the indication message points to a first device name in the E device names, and the first device name corresponds to a first display device in the E display devices; and a screen casting unit, configured to perform screen casting onto the first display device.

In a feasible implementation, the processing unit is specifically configured to obtain, from the M device names, one or more device names corresponding to a second display device, where the one or more device names separately include a device identifier of the second display device; or similarity between internet protocol IP addresses respectively corresponding to any two of the one or more device names is greater than or equal to a first threshold, and at least one of the one or more device names includes the device identifier of the second display device; or similarity between medium access control MAC addresses respectively corresponding to any two of the one or more device names is greater than or equal to a second threshold, and the at least one of the one or more device names includes the device identifier of the second display device, where a device name corresponding to the second display device in the device name list is one of the one or more device names.

In a feasible implementation, the screen casting unit is specifically configured to: perform the screen casting onto the first display device according to a first screen casting protocol in a screen casting protocol list; and if the screen casting according to the first screen casting protocol fails, perform the screen casting onto the first display device according to a next screen casting protocol of the first screen casting protocol in the screen casting protocol list, where when the screen casting is performed for a 1^{st} time, the first screen casting protocol is a 1^{st} screen casting protocol in the screen casting protocol list, the screen casting protocol list is obtained through ranking based on delays or screen casting success rates of the screen casting protocols, and a lower delay of the screen casting protocol indicates a higher ranking of the screen casting protocol in the screen casting protocol list, or a higher screen casting success rate of the screen casting protocol indicates a higher ranking of the screen casting protocol in the screen casting protocol list.

In a feasible implementation, when a selected screen casting protocol is a digital living network alliance DLNA protocol, the screen casting unit is further configured to: when a delay between a picture displayed on a terminal device and a picture displayed on the first display device is greater than or equal to a third threshold, stop encapsulating a data file to be sent to the first display device, where duration for stopping the encapsulation is preset duration.

In a feasible implementation, when a selected screen casting protocol is a digital living network alliance DLNA protocol, the screen casting unit is further configured to: when a delay between a picture displayed on the terminal device and a picture displayed on the first display device is greater than or equal to a third threshold, select D frames from a data file including C frames, encapsulate the D frames, and send the D frames to the first display device, where D is a positive integer less than C.

In a feasible implementation, when a selected screen casting protocol is a digital living network alliance DLNA protocol, the screen casting unit is further configured to: when a delay between a picture displayed on the terminal device and a picture displayed on the first display device is greater than or equal to a third threshold, adjust F timestamps respectively corresponding to F frames in a data file, where the F timestamps include a first timestamp, a moment indicated by an adjusted first timestamp is earlier than a moment indicated by the first timestamp, and F is a positive integer; and encapsulate an adjusted data file, and send the adjusted data file to the first display device.

According to a third aspect, this application provides a terminal device. The terminal device includes at least one processor, a memory, and an interface circuit. The memory, the interface circuit, and the at least one processor are interconnected through a line. The at least one memory stores instructions. When the instructions are executed by the processor, the method according to any feasible implementation of the first aspect is implemented.

According to a fourth aspect, this application provides a chip system. The chip system includes at least one processor, a memory, and an interface circuit. The memory, the interface circuit, and the at least one processor are interconnected through a line. The at least one memory stores instructions. When the instructions are executed by the processor, the method according to any feasible implementation of the first aspect is implemented.

According to a fifth aspect, an embodiment of this application provides a computer-readable storage medium. The computer-readable storage medium stores a computer program. When the computer program is executed, the method according to any feasible implementation of the first aspect is implemented.

According to a sixth aspect, an embodiment of this application provides a computer program product. The computer program product includes instructions. When the instructions are executed, the method according to any feasible implementation of the first aspect to the sixth aspect is implemented.

### BRIEF DESCRIPTION OF DRAWINGS

The following describes accompanying drawings used in embodiments of this application.
FIG. 1 is a diagram of an application scenario according to an embodiment of this application;
FIG. 2 is a diagram of a system architecture of a terminal device according to an embodiment of this application;
FIG. 3 is a schematic flowchart of a wireless screen casting method according to an embodiment of this application;
FIG. 4 is a flowchart of device search according to an embodiment of this application;
FIG. 5 is a flowchart of generating a device name list according to an embodiment of this application;
FIG. 6 is a flowchart in which a terminal device automatically selects a screen casting protocol for screen casting according to an embodiment of this application;
FIG. 7 is a flowchart in which a terminal device adjusts an encapsulation control process when performing screen casting according to a DLNA protocol according to an embodiment of this application;
FIG. 8 is a diagram of a structure of a wireless screen casting apparatus according to an embodiment of this application; and
FIG. 9 is a diagram of a structure of a terminal device according to an embodiment of this application.

### DESCRIPTION OF EMBODIMENTS

The following describes embodiments of this application with reference to accompanying drawings in embodiments of this application. In the descriptions of embodiments of this application, "/" indicates "or" unless otherwise specified. For example, A/B may indicate A or B. The term "and/or" in this specification describes merely an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. An "embodiment" mentioned in this specification means that a specific feature, structure, or characteristic described with reference to the embodiment may be included in at least one embodiment of this application. The phrase shown at various locations in this specification may not necessarily mean a same embodiment, and is not an independent or optional embodiment exclusive from another embodiment. It is explicitly and implicitly understood by persons skilled in the art that embodiments described in this specification may be combined with another embodiment.

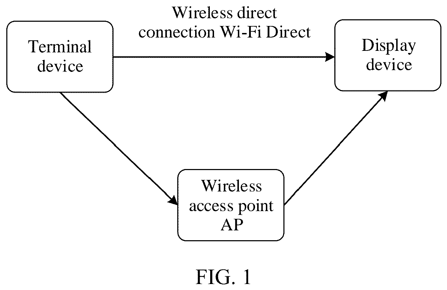

With reference to FIG. 1, FIG. 1 is a diagram of an application scenario according to an embodiment of this application, and is used to describe a scenario to which a wireless screen casting method in this application is applicable.

As shown in FIG. 1, the scenario includes a terminal device and a display device, and some scenarios may further include a wireless access point (Access Point, AP).

The terminal device is an initiator for wireless mirroring screen casting, is also a transmit end of a service, and is generally a portable mobile device like a mobile phone or a tablet PAD.

The display device is a receive end for the wireless mirroring screen casting, is also a display end of the service, and is generally a device like a large-screen smart television.

The wireless AP may be specifically implemented as a router, a switch, or the like.

A connection link may be established between the terminal device and the display device in a manner like the wireless AP or a wireless direct connection Wi-Fi Direct, to transmit a mirror stream (namely, a data file) sent by the terminal device.

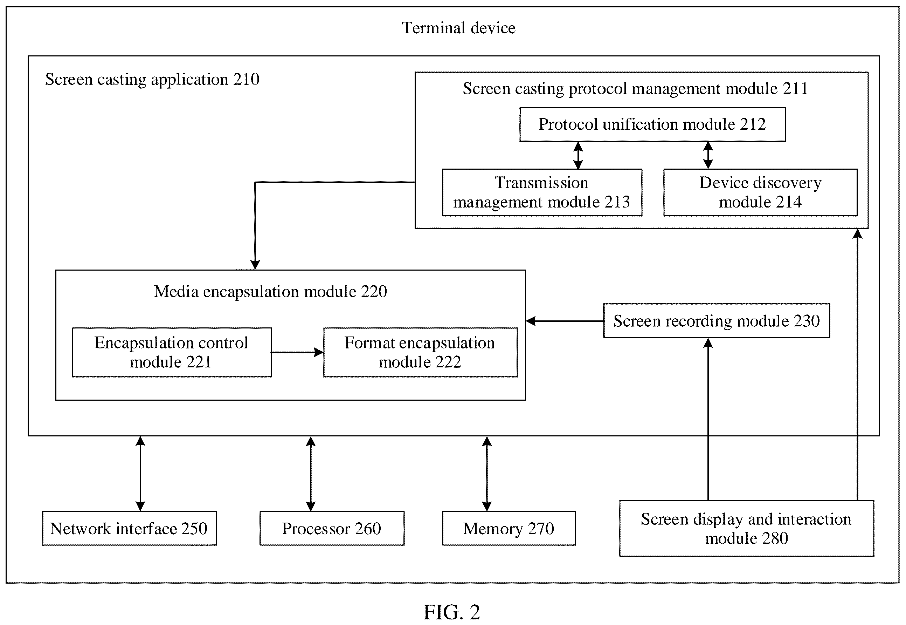

With reference to FIG. 2, FIG. 2 is a diagram of a system architecture of a terminal device according to an embodiment of this application, and is used to describe software and hardware architectures of terminal devices in FIG. 1 and the following embodiments.

As shown in FIG. 2, the terminal device includes a screen casting application 210 at a software layer, and includes a network interface 250, a processor 260, a memory 270, and a screen display and interaction module 280 at a hardware layer.

An implementation process of the wireless screen casting method in this application on the terminal device is specifically as follows.

First, the screen display and interaction module 280 is configured to: receive an instruction entered by a user, indicate, according to the instruction, the terminal device to initiate a wireless screen casting service, and transmit the instruction to a screen casting protocol management module 211. After the screen casting protocol management module 211 receives the instruction, a device discovery module 214 searches, according to different screen casting protocols, for display devices (corresponding to E display devices in the following embodiment) that can be used for screen casting and that are around the terminal device, to obtain a plurality of device names (corresponding to M display devices in the following embodiment). Then, a protocol unification module 212 unifies the plurality of device names obtained through search, to obtain a device name list. Each device name in the list corresponds to one display device, and display devices corresponding to different device names are different. Then, the device name list obtained through unification is displayed to the user, and the user enters, through the screen display and interaction module 280, a display device (corresponding to a first display device in the following embodiment) selected by the user for wireless mirror screen casting.

Then, a transmission management module 213 determines a screen casting protocol used for the wireless mirror screen casting (how to determine the screen casting protocol is described in detail in the following embodiment).

Finally, a media encapsulation module 220 encapsulates data according to the determined protocol. Specifically, an encapsulation control module 221 is configured to: adjust a timestamp of each frame of data, and control start and suspension of an encapsulation process. A format encapsulation module 222 is configured to encapsulate a data file into a corresponding data stream based on a parameter setting of the encapsulation control module 221. In the encapsulation process, the media encapsulation module 220 reads, from the memory 270, the data file that needs to be encapsulated, and the processor 260 performs a process of encapsulating the data file into the corresponding data stream. After the encapsulation is completed, the network interface 250 sends the corresponding data stream to the display device for display.

Optionally, in a screen casting process, the terminal device may further receive a user instruction through the screen display and interaction module 280, to indicate a screen recording module 230 to perform screen recording in the screen casting process.

An operating system (not shown in FIG. 2) controls a process in which hardware devices such as the network interface 250, the processor 260, and the memory 270 interact with the screen casting application 210. Details are not described herein.

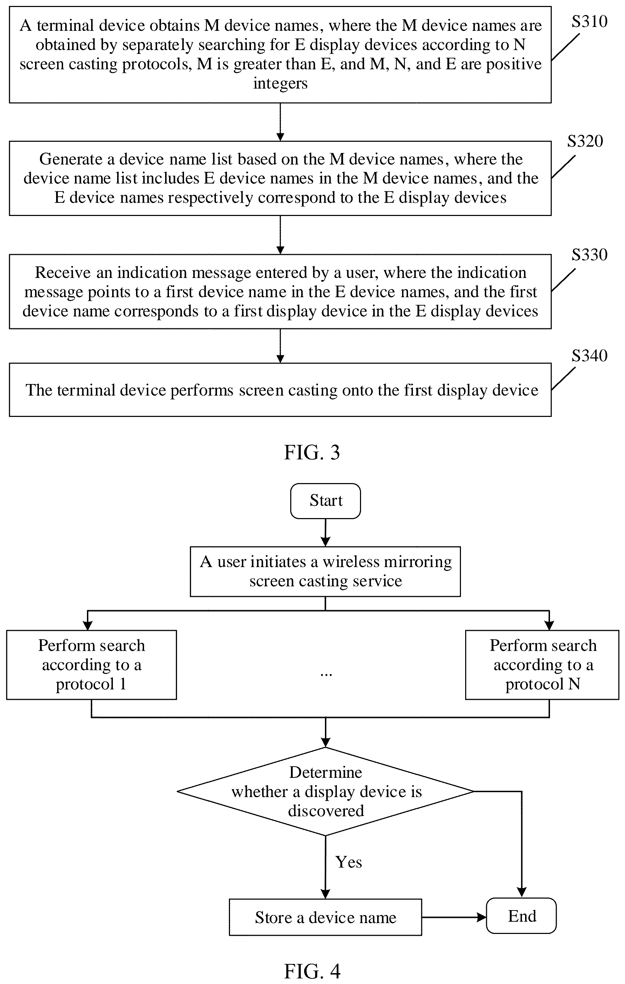

With reference to FIG. 3, FIG. 3 is a schematic flowchart of a wireless screen casting method according to an embodiment of this application. The method includes step S310, step S320, step S330, and step S340.

Step S310: A terminal device obtains M device names, where the M device names are obtained by separately searching for E display devices according to N screen casting protocols, M is greater than E, and M, N, and E are positive integers.

Specifically, the terminal device receives an instruction entered by a user, and starts to perform a wireless mirroring screen casting service. The terminal device searches for a display device within a specific distance range according to the N screen casting protocols supported by the terminal device, to obtain the M device names. That is, the M device names are obtained by searching for the E display devices within the specific distance range from the terminal device.

Each of the E display devices corresponds to one or more device names in the M device names.

When one display device is searched for according to one screen casting protocol, one device name is obtained if the display device supports the screen casting protocol, or no corresponding device name can be obtained if the display device does not support the screen casting protocol.

Optionally, the M device names may include a same device name, or the M device names are different from each other. A case in which the M device names include the same device name is specifically as follows.
(1) Device names obtained when a same display device is searched for according to a plurality of screen casting protocols may be the same or different. That is, when the same display device is searched for according to different screen casting protocols, and the same device name may be obtained, the M device names include the same device name.
(2) When the user uses a plurality of screen casting applications simultaneously, and the plurality of screen casting applications search for the display device according to a same screen casting protocol, for each display device, a plurality of same or different device names may be obtained according to the same screen casting protocol. The plurality of device names are in a one-to-one correspondence with the plurality of screen casting applications. If the same device names are obtained, the M device names include the plurality of same device names.

The following describes a process of obtaining the M device names from a perspective of a quantity of screen casting protocols.

### (1) N is equal to 1.

When the user uses the plurality of screen casting applications, and the plurality of screen casting applications separately search for the display device according to only one screen casting protocol, a plurality of device names are obtained for each of the E display devices. The plurality of device names are in a one-to-one correspondence with the plurality of screen casting applications, and the plurality of device names may include a same device name or may be different from each other. In this case, each display device corresponds to the plurality of device names in the M device names, where M is greater than E.

### (2) N is greater than 1.

When the user uses a plurality of screen casting applications, and the plurality of screen casting applications search for the display device according to the plurality of screen casting protocols, a plurality of device names are correspondingly obtained for each of the E display devices. In this case, each display device corresponds to the plurality of device names in the M device names, where M is greater than E.

When the user uses one screen casting application, and the one screen casting application searches for the display device according to the plurality of screen casting protocols, one or more device names are obtained for each of the E display devices. A case in which one device name is correspondingly obtained for one display device lies in that the one display device supports only one of the plurality of screen casting protocols. In this case, each display device corresponds to the one or more device names in the M device names. When at least one display device supports the plurality of screen casting protocols, M is greater than E.

With reference to FIG. 4, the following describes a procedure of the foregoing device search (discovery).

As shown in FIG. 4, the user first initiates the wireless mirroring screen casting service. Specifically, the user may start a screen casting application to start the search for the display device. Then, the terminal device searches for the display device according to the N screen casting protocols supported by the terminal device, and specifically, as shown in FIG. 4, performs the search according to a protocol 1, ..., and performs the search according to a protocol N.

As shown in FIG. 4, after the search according to each protocol is completed, it is determined whether the display device is discovered. If the display device is discovered, a device name obtained through search is stored. If the display device is not discovered, a search process according to the protocol ends.

Step S320: Generate a device name list based on the M device names, where the device name list includes E device names in the M device names, and the E device names respectively correspond to the E display devices.

A process of generating the device name list (which may also be referred to as device name unification) is to select the E device names from the M device names, so that the E device names are in a one-to-one correspondence with the E display devices.

Each of the M device names corresponds to one internet protocol (Internet Protocol, IP) address, and the IP address is correspondingly obtained in a search process.

The process of generating the device name list is specifically as follows. A second display device in the E display devices (any one of the E display devices) is used as an example for description.

One or more device names corresponding to the second display device in the M device names are first determined. A determining manner may be one of the following manners.

### (1) Perform determining using a device identifier.

A device name that includes a device identifier of the second display device in the M device names is the one or more device names corresponding to the second display device. That is, the one or more device names are obtained by searching for the second display device according to one or more screen casting protocols.

The device identifier may be an identifier that can uniquely identify a display device, for example, a model of the device. This is not limited in this application. For example, the device identifier may be Z6X PRO.

### (2) Perform determining using both an IP address and a device identifier.

First, a device name that includes a device identifier of the second display device and an IP address corresponding to the device name are determined. Then, the IP address is compared with another device name in the M device names, to obtain one or more device names. The one or more device names satisfy that similarity between IP addresses corresponding to any two device names is greater than or equal to a first threshold. The one or more device names are one or more device names corresponding to the second display device in the M device names. At least one of the one or more device names includes the device identifier of the second display device.

Optionally, a manner of determining the similarity between the two IP addresses may be specifically: sequentially determining whether characters at corresponding locations in the two IP addresses are the same, then collecting statistics on a proportion of locations that have a same character in an IP address length, and finally comparing the proportion with the first threshold. In addition, persons skilled in the art may alternatively compare the similarity between the IP addresses in another manner. This is not limited in this application.

### (3) Perform determining using a medium access control (Media Access Control, MAC) address and a device identifier.

This manner is similar to the second manner. To be specific, first, a device name that includes a device identifier of the second display device and a MAC address corresponding to the device name are determined. Then, the MAC address is compared with another device name in the M device names, to obtain one or more device names. The one or more device names satisfy that similarity between MAC addresses corresponding to any two device names is greater than or equal to a first threshold. The one or more device names are one or more device names corresponding to the second display device in the M device names. At least one of the one or more device names includes the device identifier of the second display device.

A MAC address corresponding to each device name is obtained by converting the IP address corresponding to the device name.

Optionally, the similarity between the two MAC addresses may be determined by comparing the similarity with a second threshold. For a specific manner, refer to the foregoing manner of determining the similarity between the IP addresses. Details are not described herein again.

After the one or more device names corresponding to the second display device are determined in the foregoing manner, one device name may be selected from the one or more device names, added to the device name list, and used as a unique device name corresponding to the second display device in the device name list.

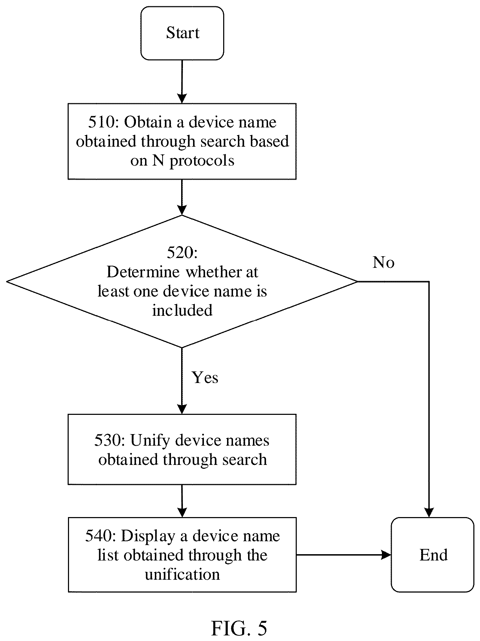

With reference to FIG. 5, the following describes a process of generating the device name list.

As shown in FIG. 5, first perform step 510: obtain the device names obtained through the search according to the N protocols. Then, perform step 520: determine whether at least one device name is included. If at least one device name is included, perform step 530: unify the device names obtained through the search. Then, perform step 540: display the device name list obtained after the unification. The list includes the E device names corresponding to the E display devices. In this process, the device name list is displayed to the user on a display screen (namely, the screen display and interaction module 280 in FIG. 1) of the terminal device, so that the user selects a display device for subsequent screen casting. After step 540 is performed, end the process of generating the list. If a determining result in step 520 is negative, end the process of generating the list.

Specifically, for a specific execution process of the foregoing steps, refer to corresponding descriptions in step S320 in the foregoing embodiment. Details are not described herein again.

Step S330: Receive an indication message entered by the user, where the indication message points to a first device name in the E device names, and the first device name corresponds to a first display device in the E display devices.

Specifically, after the terminal device displays the device name list to the user through the screen display and interaction module 280, the user taps a corresponding device name based on a selection of the user. The tap action generates the corresponding indication message that points to the first device name selected by the user. The first device name corresponds to the first device in the E display devices.

Step S340: The terminal device performs screen casting onto the first display device.

Specifically, the terminal device selects, for the screen casting, a screen casting protocol from a screen casting protocol list supported by the terminal device. A specific manner in which the terminal device selects the screen casting protocol is as follows:

Select a first screen casting protocol in the screen casting protocol list, and perform the screen castings onto the first display device according to the first screen casting protocol. If the screen casting succeeds, the terminal device starts to send data to the first display device. If the screen casting fails, the terminal device performs the screen casting onto the first display device according to a next screen casting protocol of the first screen casting protocol in the screen casting protocol list, and sequentially selects screen casting protocols until the screen casting succeeds.

When the screen casting is performed for a 1^{st} time, the first screen casting protocol is a 1^{st} screen casting protocol in the screen casting protocol list.

Optionally, screen casting protocols in the screen casting protocol list are obtained through ranking according to a preset rule. The ranking rule is as follows: (1) A lower delay of the screen casting protocol indicates a higher ranking of the screen casting protocol in the screen casting protocol list; or (2) a higher success rate of the screen casting protocol indicates a higher ranking of the screen casting protocol in the screen casting protocol list, where a success rate of the screen casting protocol is obtained through statistics based on historical data; or (3) a larger screen casting parameter of the screen casting protocol indicates a higher ranking of the screen casting protocol in the screen casting protocol list. The screen casting parameter of each screen casting protocol is obtained by performing weighted calculation on a delay and a success rate of the screen casting protocol. A specific weighting manner is not limited in this application.

That is, in this application, an optimal screen casting protocol can be automatically selected for screen casting in the foregoing manner, thereby improving a screen casting success rate and improving user experience.

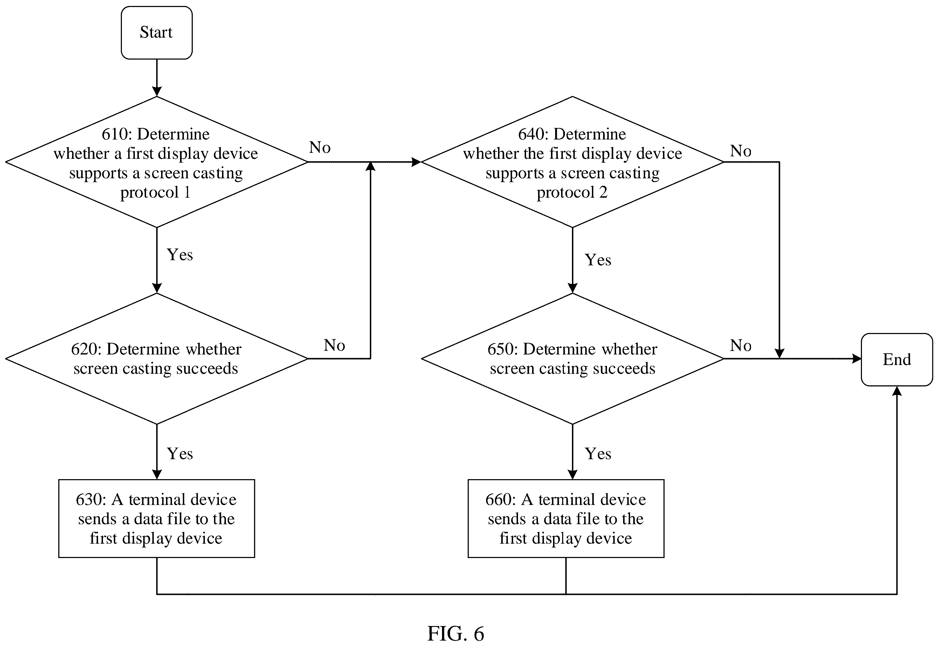

With reference to FIG. 6, the following describes a process in which the terminal device automatically selects the screen casting protocol for screen casting.

As shown in FIG. 6, after a procedure of selecting the screen casting protocol starts, first perform step 610 of determining whether the first display device supports a screen casting protocol 1. If an output result of step 610 is positive, the terminal device starts to establish a connection link with the first display device according to the screen casting protocol 1, and performs step 620: determining whether the screen casting succeeds. If an output result of step 620 is positive, perform step 630: The terminal device sends a data file to the first display device, and then ends the procedure of selecting the screen casting protocol. If the output result of step 620 or step 610 is negative, perform step 640 of determining whether the first display device supports a screen casting protocol 2. If an output result of step 640 is positive, the terminal device starts to establish a connection link with the first display device according to the screen casting protocol 2, and performs step 650: determining whether the screen casting succeeds. If an output result of step 650 is positive, perform step 660: The terminal device sends a data file to the first display device, and then ends the procedure of selecting the screen casting protocol. If the output result of step 640 or step 650 is negative, end the procedure of selecting the screen casting protocol.

The foregoing procedure of selecting the screen casting protocol in FIG. 6 is described by using an example in which the screen casting protocol list includes two screen casting protocols (the screen casting protocol 1 and the screen casting protocol 2), and cannot be understood as a limitation on a quantity of screen casting protocols in the screen casting protocol list.

The screen casting protocol 1 and the screen casting protocol 2 are respectively a 1^{st} screen casting protocol and a 2^{nd} screen casting protocol in the screen casting protocol list.

Optionally, after a DLNA protocol is selected in the foregoing manner to successfully perform the screen casting, if a delay between a picture displayed on the terminal device and a picture displayed on the first display device is greater than or equal to a third threshold, the terminal device may adjust an encapsulation control process (correspondingly determined by the media encapsulation module 220 in FIG. 2) during transmission of the data file in the following manner.

### (1) Encapsulation suspension

Specifically, when the delay is greater than or equal to the third threshold, the terminal device suspends the encapsulation of the data file for duration being a preset duration (which is set by persons skilled in the art based on a specific scenario, and is not limited in this application), to accelerate consumption of a data file buffered on the first display device. This reduces the delay between the picture displayed on the terminal device and the picture displayed on the first display device, thereby improving user experience.

### (2) Sampling encapsulation

Specifically, when the delay is greater than or equal to the third threshold, the terminal device may select D frames from the data file including C frames, encapsulate the D frames, and send the D frames to the first display device, where D is a positive integer less than C. In this manner, consumption of a data file buffered on the first display device is accelerated, thereby reducing the delay and improving user experience.

The foregoing sampling manner may be a manner like randomly drawing the C frames or drawing the C frames at a fixed time interval. This is not limited in this application.

### (3) Fast-forward playing

Specifically, when the delay is greater than or equal to the third threshold, the terminal device may adjust F timestamps respectively corresponding to F frames in the data file. The F timestamps include a first timestamp. A moment indicated by an adjusted first timestamp is earlier than a moment indicated by the first timestamp. F is a positive integer. Then, the terminal device encapsulates an adjusted data file, and sends the adjusted data file to the first display device.

The F frames are a part of or all of data in the data file.

The first timestamp is any one of the F timestamps.

A timestamp corresponding to each frame is used to indicate a playing moment of the frame, and the playing moment is relative to a starting playing moment of the data file.

To be specific, the manner (3) shortens the delay by increasing a playing speed of the data file on the first display device, thereby improving user experience.

In addition, the foregoing three manners of adjusting the encapsulation control process may be further randomly combined. Specifically, the following four encapsulation control manners may be obtained through combination: the manner (1)+the manner (2), the manner (1)+the manner (3), the manner (2)+the manner (3), and the manner (1)+the manner (2)+the manner (3). An implementation process of a specifically combined solution is not described herein again.

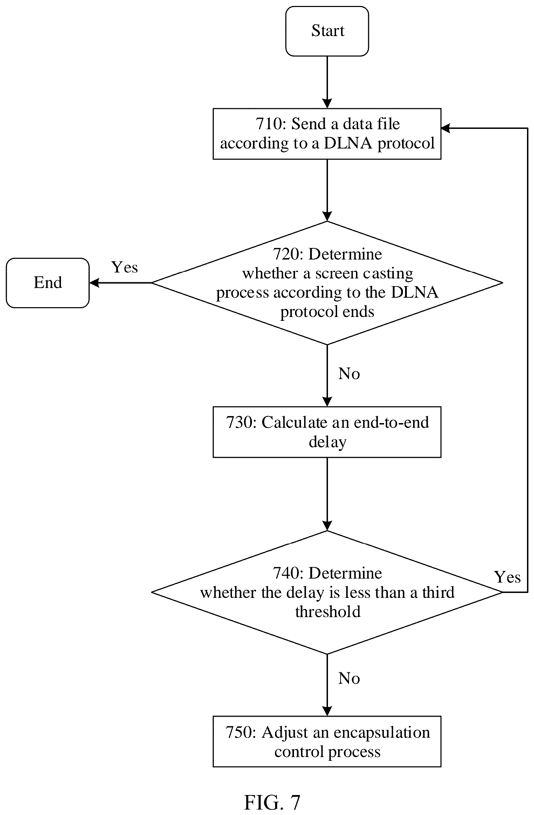

With reference to FIG. 7, the following describes a procedure in which the terminal device adjusts the encapsulation control process when performing the screen casting according to the DLNA protocol.

As shown in FIG. 7, first perform step 710 of sending the data file according to the DLNA protocol. Then, perform step 720 of determining whether a screen casting process according to the DLNA protocol ends. If the screen casting process according to the DLNA protocol ends, end the process. If the screen casting process according to the DLNA protocol does not end, perform step 730 of calculating an end-to-end delay, namely, the delay between the picture displayed on the terminal device and the picture displayed on the first display device. Then, perform step 740 of determining whether the delay is less than the third threshold. If the delay is not less than the third threshold, perform step 750 of adjusting the encapsulation control process, to be specific, in a total of the seven manners listed in the foregoing embodiment. If the delay is less than the third threshold, return to perform step 710.

Specifically, for a specific execution process of the foregoing steps, refer to the descriptions in the foregoing embodiment. Details are not described herein again.

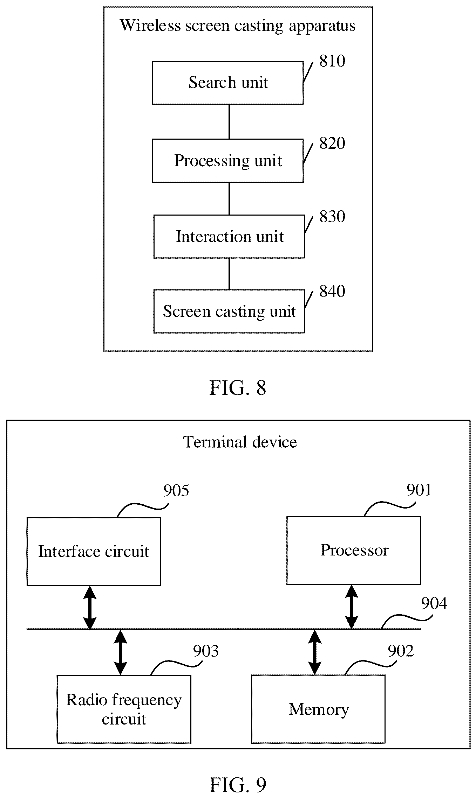

With reference to FIG. 8, FIG. 8 is a diagram of a structure of a wireless screen casting apparatus according to an embodiment of this application. As shown in FIG. 8, the apparatus includes a search unit 810, a processing unit 820, an interaction unit 830, and a screen casting unit 840.

The search unit 810 is configured to obtain M device names, where the M device names are obtained by separately searching for E display devices according to N screen casting protocols, M is greater than E, and M, N, and E are positive integers. The processing unit 820 is configured to generate a device name list based on the M device names, where the device name list includes E device names in the M device names, and the E device names respectively correspond to the E display devices. The interaction unit 830 is configured to receive an indication message entered by a user, where the indication message points to a first device name in the E device names, and the first device name corresponds to a first display device in the E display devices. The screen casting unit 840 is configured to perform screen casting onto the first display device.

In a feasible implementation, the processing unit 820 is specifically configured to obtain, from the M device names, one or more device names corresponding to a second display device, where the one or more device names separately include a device identifier of the second display device; or similarity between internet protocol IP addresses respectively corresponding to any two of the one or more device names is greater than or equal to a first threshold, and at least one of the one or more device names includes the device identifier of the second display device; or similarity between medium access control MAC addresses respectively corresponding to any two of the one or more device names is greater than or equal to a second threshold, and the at least one of the one or more device names includes the device identifier of the second display device, where a device name corresponding to the second display device in the device name list is one of the one or more device names.

In a feasible implementation, the screen casting unit 840 is specifically configured to: perform the screen casting onto the first display device according to a first screen casting protocol in a screen casting protocol list; and if the screen casting according to the first screen casting protocol fails, perform the screen casting onto the first display device according to a next screen casting protocol of the first screen casting protocol in the screen casting protocol list, where when the screen casting is performed for a 1^{st} time, the first screen casting protocol is a 1^{st} screen casting protocol in the screen casting protocol list, the screen casting protocol list is obtained through ranking based on delays or screen casting success rates of the screen casting protocols, and a lower delay of the screen casting protocol indicates a higher ranking of the screen casting protocol in the screen casting protocol list, or a higher screen casting success rate of the screen casting protocol indicates a higher ranking of the screen casting protocol in the screen casting protocol list.

In a feasible implementation, when a selected screen casting protocol is a digital living network alliance DLNA protocol, the screen casting unit 840 is further configured to: when a delay between a picture displayed on a terminal device and a picture displayed on the first display device is greater than or equal to a third threshold, stop encapsulating a data file to be sent to the first display device, where duration for stopping the encapsulation is preset duration.

In a feasible implementation, when a selected screen casting protocol is a digital living network alliance DLNA protocol, the screen casting unit 840 is further configured to: when a delay between a picture displayed on the terminal device and a picture displayed on the first display device is greater than or equal to a third threshold, select D frames from a data file including C frames, encapsulate the D frames, and send the D frames to the first display device, where D is a positive integer less than C.

In a feasible implementation, when a selected screen casting protocol is a digital living network alliance DLNA protocol, the screen casting unit 840 is further configured to: when a delay between a picture displayed on the terminal device and a picture displayed on the first display device is greater than or equal to a third threshold, adjust F timestamps respectively corresponding to F frames in a data file, where the F timestamps include a first timestamp, a moment indicated by an adjusted first timestamp is earlier than a moment indicated by the first timestamp, and F is a positive integer; and encapsulate an adjusted data file, and send the adjusted data file to the first display device.

Specifically, for a specific execution process of the wireless screen casting apparatus, refer to the corresponding process in the foregoing method embodiments. Details are not described herein again.

With reference to FIG. 9, FIG. 9 is a diagram of a structure of a terminal device according to an embodiment of this application. The terminal device is used as a specific implementation of the wireless screen casting apparatus in FIG. 8. As shown in FIG. 9, the terminal device includes a processor 901, at least one memory 902, a radio frequency circuit 903, and an interface circuit 905. The processor 901, the memory 902, the radio frequency circuit 903, and the interface circuit 905 are connected to each other through a bus 904.

The radio frequency circuit 903 is used as a constituent part of an antenna of the terminal device, and is configured to search for E display devices according to N screen casting protocols, to obtain M device names. The processor 901 is configured to generate a device name list based on the M device names, where the device name list includes E device names in the M device names, and the E device names respectively correspond to the E display devices. The processor 901 is further configured to receive, through a screen display and interaction module of the terminal device, an indication message entered by a user, where the indication message points to a first device name in the E device names, and the first device name corresponds to a first display device in the E display devices. The interface circuit 905 is configured to send a screen casting data file to the first display device. The memory 902 is configured to store the M device names and the device name list.

Specifically, for a specific execution process of the terminal device, refer to the corresponding execution procedure in the foregoing method embodiment. Details are not described herein again.

An embodiment of this application provides a chip system. The chip system includes at least one processor, a memory, and an interface circuit. The memory, the interface circuit, and the at least one processor are interconnected through a line. The at least one memory stores instructions. When the instructions are executed by the processor, a part or all of the steps described in any one of the foregoing wireless screen casting method embodiments are implemented.

An embodiment of this application provides a computer-readable storage medium. The computer-readable storage medium stores a computer program. When the computer program is executed, a part or all of the steps described in any one of the foregoing wireless screen casting method embodiments are implemented.

An embodiment of this application provides a computer program product. The computer program product includes instructions. When the instructions are executed by a processor, a part or all of the steps described in any one of the foregoing wireless screen casting method embodiments are implemented.

In the foregoing embodiments, the descriptions of each embodiment have respective focuses. For a part that is not described in detail in an embodiment, refer to related descriptions in other embodiments. It should be noted that, for ease of description, the foregoing method embodiments are all represented as a combination of a series of actions. However, persons skilled in the art should appreciate that this application is not limited to the described action order, because according to this application, some steps may be performed in another order or simultaneously. In addition, persons skilled in the art should also appreciate that embodiments described in this specification all belong to preferred embodiments, and the related actions and modules are not necessarily required by this application.

In the several embodiments provided in this application, it should be understood that the disclosed apparatus may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located at one location, or may be distributed on a plurality of network units. A part or all of the units may be selected based on an actual requirement, to achieve the objectives of the solutions in embodiments.

In conclusion, the foregoing embodiments are intended merely to describe the technical solutions in this application, but not to limit the technical solutions in this application. Although this application is described in detail with reference to the foregoing embodiments, persons of ordinary skill in the art should understand that they may still make modifications to the technical solutions described in the foregoing embodiments or make equivalent replacements to some a part of features thereof, without departing from the scope of the technical solutions of embodiments of this application.

## Claims

1. A wireless screen casting method, wherein the method comprises:
obtaining, by a terminal device, M device names, wherein the M device names are obtained by separately searching for E display devices according to N screen casting protocols, M is greater than E, and M, N, and E are positive integers;
generating a device name list based on the M device names, wherein the device name list comprises E device names in the M device names, and the E device names respectively correspond to the E display devices;
receiving an indication message entered by a user, wherein the indication message points to a first device name in the E device names, and the first device name corresponds to a first display device in the E display devices; and
performing, by the terminal device, screen casting onto the first display device.

2. The method according to claim 1, wherein the E display devices comprise a second display device, and generating the device name list based on the M device names comprises:
obtaining, from the M device names, one or more device names corresponding to the second display device, wherein the one or more device names separately comprise a device identifier of the second display device; or similarity between internet protocol IP addresses respectively corresponding to any two of the one or more device names is greater than or equal to a first threshold, and at least one of the one or more device names comprises the device identifier of the second display device; or similarity between medium access control MAC addresses respectively corresponding to any two of the one or more device names is greater than or equal to a second threshold, and the at least one of the one or more device names comprises the device identifier of the second display device, wherein
a device name corresponding to the second display device in the device name list is one of the one or more device names.

3. The method according to claim 1 or 2, wherein performing, by the terminal device, the screen casting onto the first display device comprises:
performing the screen casting onto the first display device according to a first screen casting protocol in a screen casting protocol list; and
if the screen casting according to the first screen casting protocol fails, performing the screen casting onto the first display device according to a next screen casting protocol of the first screen casting protocol in the screen casting protocol list, wherein
when the screen casting is performed for a 1^{st} time, the first screen casting protocol is a 1^{st} screen casting protocol in the screen casting protocol list, the screen casting protocol list is obtained through ranking based on delays or screen casting success rates of the screen casting protocols, and a lower delay of the screen casting protocol indicates a higher ranking of the screen casting protocol in the screen casting protocol list, or a higher screen casting success rate of the screen casting protocol indicates a higher ranking of the screen casting protocol in the screen casting protocol list.

4. The method according to any one of claims 1 to 3, wherein when the selected screen casting protocol is a digital living network alliance DLNA protocol, the method further comprises:
when a delay between a picture displayed on the terminal device and a picture displayed on the first display device is greater than or equal to a third threshold, stopping, by the terminal device, encapsulating a data file to be sent to the first display device, wherein duration for stopping the encapsulation is preset duration.

5. The method according to any one of claims 1 to 3, wherein when the selected screen casting protocol is a digital living network alliance DLNA protocol, the method further comprises:
when a delay between a picture displayed on the terminal device and a picture displayed on the first display device is greater than or equal to a third threshold, selecting D frames from a data file comprising C frames, encapsulating the D frames, and sending the D frames to the first display device, wherein D is a positive integer less than C.

6. The method according to any one of claims 1 to 3, wherein when the selected screen casting protocol is a digital living network alliance DLNA protocol, the method further comprises:
when a delay between a picture displayed on the terminal device and a picture displayed on the first display device is greater than or equal to a third threshold, adjusting F timestamps respectively corresponding to F frames in a data file, wherein the F timestamps comprise a first timestamp, a moment indicated by an adjusted first timestamp is earlier than a moment indicated by the first timestamp, and F is a positive integer; and
encapsulating, by the terminal device, an adjusted data file, and sending the adjusted data file to the first display device.

7. A wireless screen casting apparatus, wherein the apparatus comprises:
a search unit, configured to obtain M device names, wherein the M device names are obtained by separately searching for E display devices according to N screen casting protocols, M is greater than E, and M, N, and E are positive integers;
a processing unit, configured to generate a device name list based on the M device names, wherein the device name list comprises E device names in the M device names, and the E device names respectively correspond to the E display devices;
an interaction unit, configured to receive an indication message entered by a user, wherein the indication message points to a first device name in the E device names, and the first device name corresponds to a first display device in the E display devices; and
a screen casting unit, configured to perform screen casting onto the first display device.

8. The apparatus according to claim 7, wherein the processing unit is specifically configured to:
obtain, from the M device names, one or more device names corresponding to the second display device, wherein the one or more device names separately comprise a device identifier of the second display device; or similarity between internet protocol IP addresses respectively corresponding to any two of the one or more device names is greater than or equal to a first threshold, and at least one of the one or more device names comprises the device identifier of the second display device; or similarity between medium access control MAC addresses respectively corresponding to any two of the one or more device names is greater than or equal to a second threshold, and the at least one of the one or more device names comprises the device identifier of the second display device, wherein
a device name corresponding to the second display device in the device name list is one of the one or more device names.

9. The apparatus according to claim 7 or 8, wherein the screen casting unit is specifically configured to:
perform the screen casting onto the first display device according to a first screen casting protocol in a screen casting protocol list; and
if the screen casting according to the first screen casting protocol fails, perform the screen casting onto the first display device according to a next screen casting protocol of the first screen casting protocol in the screen casting protocol list, wherein
when the screen casting is performed for a 1^{st} time, the first screen casting protocol is a 1^{st} screen casting protocol in the screen casting protocol list, the screen casting protocol list is obtained through ranking based on delays or screen casting success rates of the screen casting protocols, and a lower delay of the screen casting protocol indicates a higher ranking of the screen casting protocol in the screen casting protocol list, or a higher screen casting success rate of the screen casting protocol indicates a higher ranking of the screen casting protocol in the screen casting protocol list.

10. The apparatus according to any one of claims 7 to 9, wherein when the selected screen casting protocol is a digital living network alliance DLNA protocol, the screen casting unit is further configured to:
when a delay between a picture displayed on the terminal device and a picture displayed on the first display device is greater than or equal to a third threshold, stop encapsulating a data file to be sent to the first display device, wherein duration for stopping the encapsulation is preset duration.

11. The apparatus according to any one of claims 7 to 9, wherein when the selected screen casting protocol is a digital living network alliance DLNA protocol, the screen casting unit is further configured to:
when a delay between a picture displayed on the terminal device and a picture displayed on the first display device is greater than or equal to a third threshold, select D frames from a data file comprising C frames, encapsulate the D frames, and send the D frames to the first display device, wherein D is a positive integer less than C.

12. The apparatus according to any one of claims 7 to 9, wherein when the selected screen casting protocol is a digital living network alliance DLNA protocol, the screen casting unit is further configured to:
when a delay between a picture displayed on the terminal device and a picture displayed on the first display device is greater than or equal to a third threshold, adjust F timestamps respectively corresponding to F frames in a data file, wherein the F timestamps comprise a first timestamp, a moment indicated by an adjusted first timestamp is earlier than a moment indicated by the first timestamp, and F is a positive integer; and
encapsulate an adjusted data file, and sending the adjusted data file to the first display device.

13. A terminal device, wherein the terminal device comprises at least one processor, a memory, and an interface circuit, the memory, the interface circuit, and the at least one processor are interconnected through a line, and the at least one memory stores instructions; and when the instructions are executed by the processor, the method according to any one of claims 1 to 6 is implemented.

14. A chip system, wherein the chip system comprises at least one processor, a memory, and an interface circuit, the memory, the interface circuit, and the at least one processor are interconnected through a line, and the at least one memory stores instructions; and when the instructions are executed by the processor, the method according to any one of claims 1 to 6 is implemented.

15. A computer-readable storage medium, wherein the computer-readable storage medium stores a computer program, and when the computer program is executed, the method according to any one of claims 1 to 6 is implemented.

16. A computer program product, wherein the computer program product comprises instructions, and when the instructions are executed, the method according to any one of claims 1 to 6 is implemented.
